Europäisches Patentamt

European Patent Office

Office européen des brevets

(11) Veröffentlichungsnummer: **0 150 368**
**B1**

## (12) EUROPÄISCHE PATENTSCHRIFT

(45) Veröffentlichungstag der Patentschrift:
**01.06.88**

(21) Anmeldenummer: **84115089.9**

(22) Anmeldetag: **10.12.84**

(51) Int. Cl.⁴: **G 11 B 5/127**

(54) Kombinierter Schreib- und Lese-Magnetkopf zur senkrechten Magnetisierung eines entsprechenden Aufzeichnungsmedium.

(30) Priorität: **23.12.83 DE 3346876**

(43) Veröffentlichungstag der Anmeldung:
**07.08.85 Patentblatt 85/32**

(45) Bekanntmachung des Hinweises auf die Patenterteilung:
**01.06.88 Patentblatt 88/22**

(84) Benannte Vertragsstaaten:
**DE FR GB IT**

(56) Entgegenhaltungen:
**EP - A - 0 101 352**
**FR - A - 2 428 886**

**PATENT ABSTRACTS OF JAPAN, Band 6, Nr. 237, 25. November 1982, Seite (P-157) (1115) & JP-A-57-135418**

(73) Patentinhaber: **Siemens Aktiengesellschaft Berlin und München, Wittelsbacherplatz 2, D-8000 München 2 (DE)**

(72) Erfinder: **Diepers, Heinrich, Dr., Veit-Stoss-Strasse 44, D-8552 Höchstadt/A. (DE)**
Erfinder: **Schewe, Herbert, Dr., Haydnstrasse 58, D-8522 Herzogenaurach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

### Beschreibung

Die Erfindung bezieht sich auf einen kombinierten Schreib- und Lese-Magnetkopf für ein Aufzeichnungsmedium, das mit mindestens einer magnetisierbaren Speicherschicht versehen ist, in welche längs einer Spur Informationen durch senkrechte (vertikale) Magnetisierung der Speicherschicht einzuschreiben sind, welcher Magnetkopf einen den magnetischen Fluss führenden ringkopfähnlichen Leitkörper mit zwei Magnetschenkeln aufweist, deren Pole in Bewegungsrichtung des Kopfes hintereinander und mit vorbestimmtem Abstand zueinander angeordnet sind und denen ausser einer nur für die Lesefunktion dienenden Spulenwicklung, deren Windungen sich durch einen zwischen den Magnetschenkeln ausgebildeten Zwischenraum erstrekken, eine zusätzliche Spulenwicklung für die Schreibfunktion zugeordnet ist. Ein solcher Magnetkopf geht aus «Patent Abstracts of Japan», Bd. 6, Nr. 237, 25.11.1982, Seite (P157) (P115) bzgl. JP-A-57-135 418 hervor.

Das Prinzip der senkrechten Magnetisierung zur Speicherung von Informationen ist allgemein bekannt (vgl. z.B. «IEEE Transactions on Magnetics», vol. MAG-16, no. 1, Jan. 1980, Seiten 71 bis 76 oder DE-A-29 24 013). Für dieses Prinzip, das vielfach auch als vertikale Magnetisierung bezeichnet wird, sind besondere Aufzeichnungsmedien in Form von starren Magnetspeicherplatten, flexiblen Einzelplatten (Floppy-Disks) oder Magnetbändern erforderlich. Ein entsprechendes Aufzeichnungsmedium weist mindestens eine magnetisierbare Speicherschicht vorbestimmter Dicke auf, welche ein magnetisch anisotropes Material, insbesondere aus einer CoCr-Legierung enthält. Dabei ist die· Achse der sogenannten leichten Magnetisierung dieser Schicht senkrecht zur Oberfläche des Mediums gerichtet. Mittels eines besonderen Magnetkopfes werden dann längs einer Spur die einzelnen Informationen in aufeinanderfolgenden Abschnitten, auch Zellen oder Blöcke genannt, durch entsprechende Magnetisierung der Speicherschicht eingeschrieben. In der Praxis werden im allgemeinen die magnetischen Flusswechsel, d.h. die Übergänge von einer Magnetisierungsrichtung zur entgegengesetzten, als Informationen benutzt. Die Abschnitte haben dabei eine vorbestimmte, auch als Wellenlänge bezeichnete Ausdehnung in Längsrichtung der Spur. Diese Ausdehnung kann im Vergleich zu der Grenze, die bei dem Verfahren der longitudinalen (horizontalen) Speicherung durch die Entmagnetisierung gegeben ist, wesentlich kleiner sein. Somit lässt sich nach dem Prinzip der senkrechten Magnetisierung die Informationsdichte in dem Aufzeichnungsmedium vorteilhaft vergrössern.

Die für das Prinzip der longitudinalen Magnetisierung bekannten kombinierten Schreib- und Lese-Köpfe, d.h. Köpfe, mit denen sowohl die Schreib- als auch die Lese-Funktion auszuüben ist, können jedoch nicht ohne weiteres auch für eine senkrechte Magnetisierung eingesetzt werden. Bei Verwendung dieser Köpfe, die im allgemeinen ringähnliche Gestalt haben, lässt sich zwar die auch bei dem Prinzip der senkrechten Magnetisierung angestrebte Flussführung zu einem möglichst geschlossenen Kreis mit geringem magnetischen Widerstand erreichen. Jedoch ist ein Schreiben beider Pole dieser Ringköpfe kaum zu unterdrücken, so dass sich entsprechende Schwierigkeiten beim Lesen der eingeschriebenen Informationen ergeben.

Man sieht sich deshalb gezwungen, für das Prinzip der senkrechten Magnetisierung spezielle kombinierte Schreib-/Lese-Köpfe zu entwickeln. Ein hierfür geeigneter Magnetkopf weist im allgemeinen einen sogenannten Hauptpol auf, mit dem ein hinreichend starkes senkrechtes Magnetfeld zum. Ummagnetisieren der einzelnen Abschnitte der Speicherschicht erzeugt wird. Der notwendige magnetische Rückschluss kann dann z.B. durch einen sogenannten Hilfspol auf der gegenüberliegenden Seite des Aufzeichnungsmediums erfolgen (vgl. die genannte Literaturstelle «IEEE Trans. Magn.» vol. MAG–16). Daneben ist auch ein Rückschluss durch den Streufluss bekannt («IEEE Trans. Magn.» vol. MAG–18, no. 6, Nov. 82, Seiten 1170 bis 1172). Ferner lässt sich ein magnetischer Rückschluss auch mit einem besonderen Hilfspol vornehmen, der sich auf derselben Seite wie der Hauptpol befindet (vgl. «IEEE Trans. Magn.», vol. MAG–17, no. 6, Nov. 1981, Seiten 3120 bis 3122 oder vol. MAG–18, no. 6, Nov. 1982, Seiten 1158 bis 1163 oder die genannte DE-A). Dementsprechend enthält der aus der DE-A bekannte Schreib- und Lese-Magnetkopf in Bewegungsrichtung des unter ihm hinwegbewegten Aufzeichnungsmediums gesehen auf seiner vorderen Stirnseite den Hilfspol und auf seiner rückwärtigen Seite den eigentlichen Hauptpol. Dieser Hauptpol wird von einem Magnetschenkel gebildet, der im wesentlichen aus einer senkrecht zur Bewegungsrichtung verlaufenden Magnetschicht besteht, die auf einem nicht-magnetischen Substrat aufgebracht ist. Den in Bewegungsrichtung gesehen wesentlich ausgedehnteren Hilfspol, der vor dem Hauptpol liegt, bildet ein Magnetschenkel, der sich aus mehreren, senkrecht zur Bewegungsrichtung angeordneten Magnetschichten mit dazwischenliegenden Isolationsschichten zusammensetzt. Zwischen diesem somit eine vergleichsweise wesentlich grössere Fläche der Spur überdeckenden Hilfspol und dem Hauptpol ist ein als Luftspalt bezeichneter Zwischenraum von einigen • m Breite ausgebildet. In diesem Luftspalt liegt eine elektrische Wicklung, mit der für die Schreibfunktion der Hauptpol erregt bzw. für die Lesefunktion die Erregung des Hauptpoles registriert werden kann. Wegen des erforderlichen verhältnismässig hohen Schreibstromes muss diese Wicklung jedoch entsprechend grosse Leiterquerschnitte aufweisen. Da aber der Zwischenraum zwischen Haupt- und Hilfspol sehr schmal ist, werden somit die Windungszahl der Wicklung und folglich die Lesespannung entsprechend begrenzt. Der Hilfspol soll in jedem Falle lediglich nur zur magnetischen Flussrückführung dienen. Ein eventuelles Mitschreiben des Hilfspols kann gegebenenfalls in Kauf genommen werden, da ihm der schreibende Hauptpol stets nacheilt und somit vom Hilfspol eventuell geschriebene Informationen überschreibt. Voraussetzung dafür ist jedoch, dass die Breite des Hilfspoles nicht grösser als die des Hauptpoles ist und somit bereits beschriebene Nachbarspuren unbeeinflusst bleiben. Bei diesem bekannten Magnetkopf ist ausser dem grösseren Querschnitt des Hilfspols im Vergleich zum Hauptpol auch eine verhältnismässig grosse Breite des Luftspaltes zu fordern, um so eine weitgehende Reduzierung der magnetischen Flussdichte am Hilfspol gewährleisten zu können. Dennoch lässt sich bei dem bekannten Magnetkopf sein Luftspalt nicht so breit ausbilden, dass ein Mitlesen des Hilfspols mit seiner ablaufenden Kante völlig zu unterbinden ist. Hieraus können sich Schwierigkeiten bei der Informationserkennung geben.

Der von der elektrischen Wicklung in dem bekannten Magnetkopf nicht ausgefüllte, dem Aufzeichnungsmedium zugewandte Restraum des Luftspaltes muss mit einer sogenannten isolierenden Spaltschicht gefüllt werden. Diese Spaltschicht soll aus möglichst hartem Material wie z.B. Al$_2$O$_3$ bestehen, um Einkerbungen oder Auswaschungen während der Kopfherstellung zu vermeiden. Derartige Unebenheiten können nämlich zum Absturz des über dem Aufzeichnungsmedium mit äusserst geringem Abstand geführten Magnetkopfes durch sich einlagernde Schmutzpartikel führen. Es hat sich jedoch gezeigt, dass die Herstellung dieser zwischen dem Haupt- und dem Hilfspol liegenden Spaltschicht ausserordentlich schwierig durchzuführen ist, wenn verhältnismässig grosse Spaltweiten wie bei dem bekannten Magnetkopf erforderlich sind.

Auf Grund der sich bei dem Prinzip der senkrechten Magnetisierung ergebenden Schwierigkeiten beim Lesen mit den bekannten kombinierten Schreib- und Lese-Köpfen ist vorgeschlagen worden, die Funktion des Schreibens und des Lesens auch mit getrennten Köpfen auszuüben, um so diese Köpfe an die jeweilige Funktion optimal anpassen zu können (vgl. z.B. «IEEE Trans. Magn.», vol. MAG–16, no. 5, Sept. 1980, Seiten 967 bis 972). Für das Lesen lassen sich die von dem Prinzip der longitudinalen Magnetisierung an sich bekannten Ringköpfe verwenden, während das Schreiben mit speziellen Köpfen durchzuführen ist. Ein solcher Schreibkopf weist z.B. auf seiner der Speicherschicht des Aufzeichnungsmediums zugewandten Seite einen auch als Einzel-Pol-Kopf bezeichneten Hauptpol mit longitudinaler Ausdehnung von z.B. 3 µm auf, dem auf der Rückseite des Aufzeichnungsmediums ein wesentlich ausgedehnterer Hilfspol gegenüberliegt. Der zweite, nur zum Lesen benötigte Kopf ist ein bekannter Ringkopf und hat eine Spaltweite von z.B. 0,2 µm (vgl. «IEEE Trans. Magn.» vol. MAG–17, no. 6, Nov. 1981, Seiten 2538 bis 2540). Entsprechende Systeme zum Lesen und Schreiben mit getrennten, an die jeweilige Funktion angepassten besonderen Köpfe sind jedoch konstruktiv verhältnismässig aufwendig.

Ferner ist aus der eingangs genannten Literaturstelle «Pat. Abstr. of Japan» ein kombinierter Schreib-/Lese-Magnetkopf zu entnehmen, der einen ringkopfähnlichen Leitkörper mit zwei Magnetschenkeln aufweist und mit dem dennoch Informationen quasi als Einzel-Pol-Kopf vertikal in ein Aufzeichnungsmedium einzuschreiben sind. Dieser Magnetkopf enthält nämlich neben einer Lesespulenwicklung für die Schreibfunktion eine zusätzliche Spulenwicklung, die den gesamten ringkopfähnlichen Leitkörper umschliesst. Die andere, als Lesespule dienende Spulenwicklung bleibt dabei stromlos. Ihr sich durch den Zwischenraum zwischen den beiden Magnetschenkeln erstreckender Wicklungteil befindet sich dabei vorteilhaft in einem praktisch feldfreien Raum. Mit der zusätzlichen Wicklung kann somit zum Schreiben in den beiden Magnetschenkeln ein magnetischer Fluss gleicher Polarität erzeugt werden. Das entsprechende schreibende Feld erstreckt sich folglich über die Feldaustrittsflächen beider Magnetschenkel und den zwischen den Schenkeln befindlichen Luftspalt, ist also in longitudinaler Richtung verhältnismässig ausgedehnt. Die somit zu erreichende maximale Bit-Dichte ist dementsprechend begrenzt. Ausserdem ist die zusätzliche Schreibwicklung aus diskreten Leitern gewickelt. Das bedeutet, dass nur ein Teil des bekannten Kopfes in Dünnschichttechnik zu erstellen ist und dieser Teil dann nachträglich zu bewickeln ist. Ein derartiges Herstellungsverfahren ist dementsprechend aufwendig.

Aufgabe der vorliegenden Erfindung ist es somit, den eingangs genannten kombinierten Schreib- und Lese-Magnetkopf dahingehend zu verbessern, dass er verhältnismässig einfach herzustellen ist und mit ihm eine schaltbare Schreib- und Lesefunktion mit jeweils verhältnismässig hohem Wirkungsgrad nach dem Prinzip der senkrechten Magnetisierung ermöglicht ist.

Diese Aufgabe wird erfindungsgemäss dadurch gelöst, dass die zusätzliche Spulenwicklung den einen Magnetschenkel zumindest teilweise umschliesst und dass der andere Magnetschenkel zumindest in einem Teilabschnitt einen vorbestimmten geringen Querschnitt aufweist, so dass dieser Teilabschnitt während der Schreibfunktion mittels der zusätzlichen Schreib-Spulenwicklung bei Stromlosigkeit der Lese-Spulenwicklung zumindest weitgehend in die magnetische Sättigung getrieben ist.

Die mit dieser Ausgestaltung dieses Magnetkopfes verbundenen Vorteile sind insbesondere darin zu sehen, dass der für die Schreibfunktion durch einen verhältnismässig grossen Schreibstrom in der zusätzlichen Spulenwicklung in die Sättigung getriebene Teilabschnitt des einen Magnetschenkels wie eine Sperre für den magnetischen Fluss in diesem Schenkel wirkt. Somit nimmt dieser Magnetschenkel an der Schreibfunktion praktisch nicht teil, d.h., nur mit dem anderen Magnetschenkel schreibt also der Magnetkopf vorteilhaft quasi als Einzel-Pol-Kopf mit entsprechend geringer longitudinaler Ausdehnung die Informationen in das Aufzeichnungsmedium. Da Flussänderungen beim Lesen nach dem Prinzip der senkrechten Magnetisierung erheblich kleiner sind als beim Schreiben, besteht ausserdem keine Gefahr, dass der Magnetschenkel mit dem geringen Querschnitt magnetisch gesättigt wird. Der Magnetkopf nach der Erfindung kann somit für die Lesefunktion in bekannter Weise als Ringkopf betrieben werden.

Darüber hinaus kann durch die besondere Anordnung der Schreibspulenwicklung nur an dem schreibenden Magnetschenkel das erforderliche Magnetfeld mit gutem Wirkungsgrad realisiert werden. Ausserdem lässt sich diese Spulenwicklung vorteilhaft nach dem gleichen Herstellungsverfahren, insbesondere in Dünnfilmtechnik, aufbauen wie die Lesespulenwicklung.

Vorteilhafte Ausgestaltungen des Magnetkopfes nach der Erfindung gehen aus den Unteransprüchen hervor.

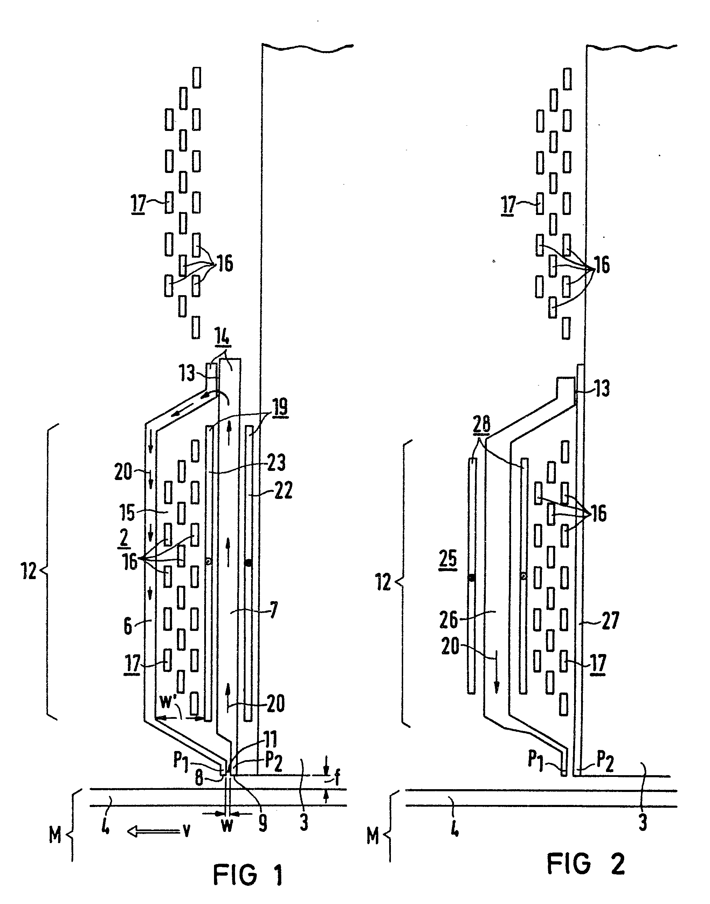

Zur weiteren Erläuterung der Erfindung und deren in den Unteransprüchen gekennzeichneten Weiterbildungen wird auf die Zeichnung Bezug genommen, in deren Fig. 1 und 2 zwei Ausführungsbeispiele eines erfindungsgemässen Magnetkopfes als Längsschnitte schematisch veranschaulicht sind.

Bei dem in Fig. 1 gezeigten kombinierten Schreib- und Lese-Magnetkopf nach der Erfindung wird von an sich bekannten ringkopfähnlichen Ausführungsformen gemäss dem Prinzip der senkrechten (vertikalen) Magnetisierung ausgegangen. Der in der Fig. allgemein mit 2 bezeichnete Kopf, der z.B. während seiner Schreibfunktion gezeigt sein soll, befindet sich auf einer Flachseite eines Substratkörpers 3, der z.B. die Stirnseite oder die Rückseite eines gebräuchlichen, als Flugkörper bezeichneten Elementes bildet und in der Fig. nur als Teil angedeutet ist. Dieser Kopf ist relativ zu einem an sich bekannten, vertikal zu magnetisierenden Aufzeichnungsmedium M in geringer Flughöhe f von beispielsweise 0,2 μm über einer Speicherschicht 4 dieses Mediums längs einer Spur zu führen. Z.B. wird das Aufzeichnungsmedium unter dem Kopf hinweggeführt. Die relative Bewegungsrichtung des Aufzeichnungsmediums M bezüglich des Magnetkopfes 2 ist durch eine mit v bezeichnete gepfeilte Linie angedeutet.

Der Magnetkopf 2 weist zwei Magnetschenkel 6 und 7 auf, die weitgehend und insbesondere an ihren dem Aufzeichnungsmedium M zugewandten Enden 8 bzw. 9 zumindest annähernd senkrecht zur Oberfläche des Aufzeichnungsmediums ausgerichtet sind und dort jeweils einen Magnetpol $P_1$ bzw. $P_2$ bilden. Zwischen diesen beiden Schenkelenden ist ein Luftspalt 11 mit einer vorteilhaft geringen longitudinalen, d.h. in Bewegungsrichtung v weisenden Weite w von unter 1 μm, insbesondere unter 0,3 μm ausgebildet. In einem mittleren Bereich 12 des Magnetkopfes 2 ist der Abstand zwischen den beiden Magnetschenkeln 6 und 7 gegenüber der Spaltweite w erweitert, indem z.B. der hinsichtlich der Bewegungsrichtung rückwärtige Magnetschenkel 6 in diesem Bereich auf einen grösseren Abstand w' bezüglich des vorderen, gerade ausgebildeten Magnetschenkels 7 führt. Ausserhalb dieses Bereiches auf der dem Aufzeichnungsmedium M abgewandten Seite sind die Magnetschenkel 6 und 7 in bekannter Weise in einem Verbindungsbereich 13 wieder zusammengeführt. Die beiden Magnetschenkel bilden somit einen den magnetischen Fluss führenden Leitkörper 14 mit ringkopfähnlicher Gestalt. Durch den zwischen den beiden Magnetschenkeln 6 und 7 in dem mittleren Bereich 12 ausgebildeten Zwischenraum 15 erstrecken sich die Windungen 16 einer beispielsweise dreilagigen, flachen Spulenwicklung 17, die als Lesespule dienen soll. Sie bleibt jedoch für die in der Fig. angenommene Schreibfunktion stromlos. Während dieser Funktion ist die Lese-Spulenwicklung 17 an ihren Enden vorteilhaft mit einem hinreichend niederohmigen Widerstand überbrückt, um zu gewährleisten, dass ein angeschlossener Leseverstärker nicht durch induzierte Spannungsspitzen beschädigt wird.

Für diese Schreibfunktion ist gemäss der Erfindung eine zusätzliche Spulenwicklung 19 vorgesehen, welche den einen der beiden Magnetschenkel 6 und 7, beispielsweise den zu dem Substratkörper 3 am nächsten liegenden Schenkel 7, zumindest teilweise, z.B. in dessen Bereich 12 umschliesst. Diese zusätzliche Spulenwicklung 19 wird z.B. von einer einzigen breiten Spulenschleife oder auch von mehreren Windungen gebildet. Mit einem vorhandenen, durch die eingezeichneten Stromflussrichtungssymbole veranschaulichten Schreibstrom, der verhältnismässig gross ist, soll gemäss der Erfindung der andere Magnetschenkel 6 zumindest in einem Teilabschnitt in die magnetische Sättigung zu treiben sein. Hierzu weist dieser Magnetschenkel 6 einen entsprechend kleineren Querschnitt seines den magnetischen Fluss führenden Materials auf, so dass er dann wie eine magnetische Sperre für den magnetischen Fluss wirkt, welcher von der dem Magnetschenkel 7 zugeordneten Spulenwicklung 19 erzeugt wird. Diese Sperrwirkung ist in der Fig. durch gepfeilte, in dem Schenkel 6 immer kürzer werdende Linien 20 angedeutet. Am Ende 8 des Magnetschenkels 6 mit dem verhältnismässig geringen Querschnitt ist somit höchstens nur noch ein minimaler Magnetfluss vorhanden, so dass praktisch nur mit dem magnetischen Fluss 20 des Magnetschenkels 7 die Schreibfunktion an dem Pol $P_2$ ausgeübt wird. Der erfindungsgemässe Magnetkopf 2 schreibt also vorteilhaft quasi wie ein Einzel-Pol-Kopf. Ausser bei dieser Schreibfunktion bleibt jedoch die Spulenwicklung 19 stromlos, so dass dann der Magnetkopf 2 mit der Lesespulenwicklung 17 als gewöhnlicher Ringkopf betrieben wird. Magnetische Sättigungseffekte in dem Magnetschenkel 6 sind dabei ausgeschlossen, weil bei dieser Funktion der magnetische Fluss sehr gering ist.

Für die Herstellung des Magnetkopfes 2 in Dünnschicht- bzw. Dünnfilm-Technik wird im allgemeinen ein Flugkörper mit einem Substrat verwendet, das z.B. aus TiC und $Al_2O_3$ besteht. Gegebenenfalls kann der entsprechende Substratkörper 3 noch mit einer hinreichend dicken Isolationsschicht z.B. aus $Al_2O_3$ versehen werden. Zum Aufbau der Magnetschenkel 6 und 7 werden beispielsweise 1 bis 5 • m dünne Magnetschichten aus speziellen NiFe-Legierungen wie Permalloy (Ni/Fe–81/19) oder aus weichmagnetischen amorphen Materialien, z.B. aus FeB, durch Sputtern, Aufdampfen oder galvanische Abscheidung aufgebracht und jeweils durch eine nicht-magnetische Zwischenlage z.B. aus $SiO_2$ oder $Al_2O_3$ voneinander getrennt. Die Magnetisierung dieser Magnetschichten liegt dabei in der Schichtebene. Durch den Herstellungsprozess bedingt, weisen die Magnetschichten eine uniaxiale Anisotropie auf, d.h., jede Magnetschicht hat zwei um 90° gedrehte Anisotropieachsen, die als leichte bzw. schwere Richtung bezeichnet werden. Die Magnetisierung liegt bevorzugt parallel oder antiparallel zur leichten Richtung. Die leichte Richtung der Magnetisierung kann z.B. beim Aufbringen der jeweiligen Schicht durch ein angelegtes Magnetfeld induziert werden. Sie liegt im allgemeinen immer senkrecht zur Richtung des magnetischen Flusses in dem Leitkörper 14, d.h. im Bereich der Magnetpole $P_1$ und $P_2$ im wesentlichen parallel zur Oberfläche des Aufzeichnungsmediums M. Die aufgewachsenen unterschiedlichen Schichten werden durch an sich bekannte Techniken wie Photolithographie, Plasma-, Ionenstrahl- oder nasschemisches Ätzen strukturiert und damit die beiden Magnetschenkel des Kopfes ausgebildet.

Zum Aufbau des Magnetkopfes 2 wird zunächst auf dem Substratkörper 3 bzw. auf dessen Isolationsschicht ein unterer Teil der zusätzlichen, als Schreibspule dienenden Spulenwicklung 19 ausgebildet, indem eine z.B. 3 • m dicke Schicht aus Cu oder Al oder Au abgeschieden und entsprechend strukturiert wird. Auf diesen Wicklungsteil 22 mit verhältnismässig grossem Leiterquerschnitt wird dann eine weitere Isolationsschicht abgeschieden, bevor die Schichten des ersten Magnetschenkels aufgebracht werden. Dieser Magnetschenkel ist im Bereich 12 der Spulenwicklung 19 verhältnismässig dick, beispielsweise 2 bis 4 • m dick ausgebildet und verjüngt sich zur Polspitze $P_2$ auf etwa 0,2 bis 1 • m. Der Magnetschenkel 7 wird dann bis auf die Verbindungsstelle 13 mit dem zweiten Magnetschenkel 6 mit einer Isolations- und Spaltschicht überzogen. Diese Spaltschicht besteht vorteilhaft aus einem harten Material wie z.B. $Al_2O_3$.

Nach Fertigstellung des ersten Magnetschenkels 7 und der Spaltschicht wird dann der obere Teil 23 der zusätzlichen Spulenwicklung 19 entsprechend ausgebildet, strukturiert und mit dem unteren Teil 22 zu der einzigen Wicklungsschleife der Spulenwicklung 19 mit verhältnismässig grossem Leiterquerschnitt verbunden. Anschliessend werden die einzelnen Windungen 16 der als Lesespule dienenden Wicklung 17 ebenfalls in Dünnschicht-Technik hergestellt und strukturiert.

Da die in der Wicklung 17 induzierten Ströme sehr gering sind, braucht der Leiterquerschnitt durch die elektrische Belastung praktisch nicht festgelegt zu werden. Aus fertigungstechnischen Gründen wird man allerdings extrem geringe Dicken und sehr feine Strukturen vermeiden. Die z.B. aus Cu, Au oder Al bestehenden Windungen dieser dreilagig angenommen Wicklung können beispielsweise Querschnitte von 0,1 µm × 3 µm aufweisen und sind in ein spezielles Einebnungsmaterial eingebettet. Dieses Material kann ein Kunststoff-Lack, z.B. auf Polyimid-Basis sein.

Hieran schliesst sich das Aufbringen und strukturieren des zweiten lamellierten Magnetschenkels 6 an. Dieser Magnetschenkel ist so dünn, beispielsweise nur 0,5 bis 2 µm dick, dass er beim Schreiben mittels der Spulenwicklung 19 in die magnetische Sättigung getrieben wird. Seine Magnetschichten sind im Bereich des Spaltes 11 nur über die Spaltschicht und in dem mittleren Bereich 12 zusätzlich über die Einebnungsschichten mit den eingelagerten Windungen 16 der Spulenwicklung 17 von dem Magnetschenkel 7 getrennt. Im Bereich der Verbindungsstelle 13 sind beide Magnetschenkel 6 und 7 aneinandergefügt, so dass eine ringkopfähnliche Gestalt des Magnetkopfes erreicht wird.

Zuletzt wird zum Schutz des so hergestellten Dünnschicht-Magnetkopfes 2 noch eine verhältnismässig dicke Protektionsschicht z.B. aus $Al_2O_3$ aufgebracht.

Die in Fig. 2 schematisch gezeigte weitere Ausführungsform eines Magnetkopfes 25 nach der Erfindung entspricht in grossen Teilen dem Ausführungsbeispiel nach Fig. 1, wobei in den Figuren übereinstimmende Teile mit den gleichen Bezugszeichen versehen sind. Der Magnetkopf 25 unterscheidet sich von dem Magnetkopf 2 gemäss Fig. 1 im wesentlichen nur dadurch, dass hier mit der Polspitze $P_1$ seines äusseren Magnetschenkels 26 geschrieben wird. Dieser Magnetschenkel weist somit einen grösseren Querschnitt auf als der auf dem Substratkörper 3 bzw. dessen Isolationsschicht direkt angeordnete Magnetschenkel 27. Dieser Magnetschenkel 27 ist während der Schreib-Funktion der zusätzlichen Schreibspulenwicklung 28, welche den äusseren Magnetschenkel 26 zumindest teilweise umgibt, in die magnetische Sättigung getrieben. Ein besonderer Vorteil dieser Ausführungsform des Magnetkopfes 25 ist dadurch gegeben, dass seine Lesespulenwicklung 17 über dem dünnen Magnetschenkel aufgebaut ist, so dass die Einebnung der einzelnen Spulenebenen besonders einfach möglich ist.

**Patentansprüche**

1. Kombinierter Schreib- und Lese-Magnetkopf (2, 25) für ein Aufzeichnungsmedium (M), das mit mindestens einer magnetisierbaren Speicherschicht (4) versehen ist, in welche längs einer Spur Informationen durch senkrechte (vertikale) Magnetisierung der Speicherschicht (4) einzuschreiben sind, welcher Magnetkopf (2, 25) einen den magnetischen Fluss führenden ringkopfähnlichen Leitkörper (14) mit zwei Magnetschenkeln (6, 7; 26, 27) aufweist, deren Pole (P₁, P₂) in Bewegungsrichtung des Kopfes hintereinander und mit vorbestimmtem Abstand (11) zueinander angeordnet sind und denen ausser einer nur für die Lesefunktion dienenden Spulenwicklung (17), deren Windungen (16) sich durch einen zwischen den Magnetschenkeln (6, 7; 26, 27) ausgebildeten Zwischenraum (15) erstrecken, eine zusätzliche Spulenwicklung (19, 28) für die Schreibfunktion zugeordnet ist, dadurch gekennzeichnet, dass die zusätzliche Spulenwicklung (19, 28) den einen Magnetschenkel (7, 26) zumindest teilweise umschliesst und dass der andere Magnetschenkel (6, 27) zumindest in einem Teilabschnitt einen vorbestimmten geringen Querschnitt aufweist, so dass dieser Teilabschnitt während der Schreibfunktion mittels der zusätzlichen Schreib-Spulenwicklung (19, 28) bei Stromlosigkeit der Lese-Spulenwicklung (17) zumindest weitgehend in die magnetische Sättigung getrieben ist.

2. Magnetkopf nach Anspruch 1, dadurch gekennzeichnet, dass zumindest teilweise sein den Magnetfluss führender Leitkörper (14) als Dünnschicht-Struktur auf der gegebenenfalls mit einer Isolationsschicht versehenen Flachseite eines ebenen Substratkörpers (3) in mehreren Schichten ausgebildet ist.

3. Magnetkopf nach Anspruch 2, dadurch gekennzeichnet, dass die den Leitkörper (14) teilweise umgebenden Spulenwicklungen (17, 19, 28) ebenfalls als Dünnschicht-Strukturen in mehreren Schichten ausgebildet sind.

4. Magnetkopf nach Anspruch 3, dadurch gekennzeichnet, dass die Lese-Spulenwicklung (17) als mehrlagige, zumindest weitgehend planare Struktur ausgebildet ist.

5. Magnetkopf nach einem der Ansprüche 1 bis 4, dadurch gekennzeichnet, dass zumindest teilweise sein den Magnetfluss führender Leitkörper (14) aus weichmagnetischem Material besteht.

6. Magnetkopf nach einem der Ansprüche 1 bis 5, dadurch gekennzeichnet, dass sein den Magnetfluss führender Leitkörper (14) aus einem Material besteht, dessen leichte Magnetisierung zumindest weitgehend senkrecht zur Führungsrichtung des Magnetflusses gerichtet ist.

7. Magnetkopf nach einem der Ansprüche 1 bis 6, dadurch gekennzeichnet, dass der Abstand (w) zwischen den dem Aufzeichnungsmedium (M) zugewandten Enden (8, 9) der Pole (P₁, P₂) der Magnetschenkel (6, 7; 26, 27) höchstens 1 μm beträgt.

8. Magnetkopf nach einem der Ansprüche 1 bis 7, dadurch gekennzeichnet, dass zwischen den Magnetschenkeln (6, 7; 26, 27) ein vom Abstand (w) zwischen den dem Aufzeichnungsmedium (M) zugewandten Enden (8, 9) ihrer Pole (P₁, P₂) auf einen grösseren Abstand (w') erweiterter Zwischenraum (15) ausgebildet ist, in dem teilweise die Windungen (16) der Lese-Spulenwicklung (17) angeordnet sind.

9. Magnetwicklung nach einem der Ansprüche 1 bis 8, dadurch gekennzeichnet, dass die zusätzliche Schreib-Spulenwicklung (19, 28) aus einer einzigen Spulenschleife um den einen Magnetschenkel (7, 26) gebildet ist, wobei ihre Wicklungsteile (22, 23) den jeweiligen Magnetschenkel (7, 26) flächenmässig zumindest grossenteils überdecken.

10. Magnetkopf nach einem der Ansprüche 1 bis 8, dadurch gekennzeichnet, dass die zusätzliche Schreib-Spulenwicklung mehrere Windungen aufweist.

11. Magnetkopf nach einem der Ansprüche 1 bis 10, dadurch gekennzeichnet, dass der Lese-Spulenwicklung (17) während der Schreibfunktion mit der zusätzlichen Schreib-Spulenwicklung (19, 28) ein Widerstand mit einem vorbestimmten niedrigen Ohm-Wert parallelgeschaltet ist.

**Revendications**

1. Tête magnétique combinée d'ériture et de lecture (2, 25) pour un milieu d'enregistrement (M) qui est pourvu d'au moins une couche de mémorisation magnétisable (4), dans laquelle sont à inscrire des informations par magnétisation perpendiculaire (verticale) le long d'une piste, tête magnétique (2, 25) qui présente un corps conducteur (14) semblable à une tête annulaire, qui guide le flux magnétique et possède deux branches magnétiques (6, 7; 26, 27) dont les pôles (P₁, P₂) sont disposés l'un derrière l'autre dans le sens de déplacement de la tête et à une distance prédéterminée (11) l'un par rapport à l'autre et auxquelles sont coordonnés, outre un enroulement de bobine (17) servant seulement à la fonction de lecture et dont les spires (16) s'étendent à travers un espace intermédiaire (15) formé entre les branches magnétiques (6, 7; 26, 27), un enroulement de bobine supplémentaire (19, 28) pour la fonction d'écriture, caractérisée en ce que l'enroulement de bobine supplémentaire (19, 28) entoure au moins en partie une branche magnétique (7, 26) et que l'autre branche magnétique (6, 27) présente, au moins dans un tronçon partiel, une faible section prédéterminée, si bien que ce tronçon partiel est poussé, au moins dans une forte mesure, à l'état de saturation magnétique, pendant la fonction d'écriture, au moyen de l'enroulement de bobine supplémentaire (19, 28) pour l'écriture, au cas où l'enroulement de bobine (17) pour la lecture n'est pas parcouru par un courant.

2. Tête magnétique selon la revendication 1, caractérisée en ce que son corps conducteur (14), guidant le flux magnétique, est réalisé en partie au moins comme une structure en couche mince en plusieurs couches sur le côté plat, éventuellement pourvu d'une couche isolante d'un corps plan (3) formant substrat.

3. Tête magnétique selon la revendication 2, caractérisée en ce que les enroulements de bobine (17, 19, 28) entourant partiellement le corps conducteur (14), sont également réalisés comme des structures à couche mince en plusieurs couches.

4. Tête magnétique selon la revendication 3, caractérisée en ce que l'enroulement de bobine de lecture (17) est réalisé comme une structure à plusieurs couches qui est planaire dans une forte mesure au moins.

5. Tête magnétique selon une des revendications 1 à 4, caractérisée en ce que son corps conducteur (14), guidant le flux magnétique, est formé en partie au moins de matériau magnétique doux.

6. Tête magnétique selon une des revendications 1 à 5, caracterisée en ce que son corps conducteur (14), guidant le flux magnétique, est formé d'un matériau dont la magnétisation légère est orientée au moins dans une forte mesure perpendiculairement à la direction de guidage du flux magnétique.

7. Tête magnétique selon une des revendications 1 à 6, caractérisée en ce que la distance (w) entre les extrémités (8, 9) dirigées vers le milieu d'enregistrement (M) des pôles ($P_1$, $P_2$) des branches magnétiques (6, 7; 26, 27) est tout au plus de 1 µm.

8. Tête magnétique selon une des revendications 1 à 7, caractérisée par la formation, entre les branches magnétiques (6, 7; 26, 27), d'un espace intermédiaire (15) élargi à une plus grande distance (w') que celle (w) entre les extrémités (8, 9) dirigées vers le milieu d'enregistrement (M) de leurs pôles ($P_1$, $P_2$), espace dans lequel les spires (16) de l'enroulement de bobine de lecture (17) sont disposées en partie.

9. Tête magnétique selon une des revendications 1 à 8, caractérisée en ce que l'enroulement de bobine d'écriture supplémentaire (19, 28) est formé d'une seule boucle autour d'une branche magnétique (7, 26), boucle dont les parties d'enroulement (22, 23) recouvrent la surface de cette branche magnétique (7, 26) au moins en grande partie.

10. Tête magnétique selon une des revendications 1 à 8, caractérisée en ce que l'enroulement de bobine d'écriture supplémentaire présente plusieurs spires.

11. Tête magnétique selon une des revendications 1 à 10, caractérisée en ce qu'une résistance avec une faible valeur ohmique, préfixée, est connectée en parallèle avec l'enroulement de bobine de lecture (17) pendant la fonction d'écriture avec l'enroulement de bobine d'écriture supplémentaire (19, 28).

**Claims**

1. Combined write and read magnetic head (2, 25) for a recording medium (M) provided with at least one magnetisable memory layer (4) into which information is to be input along one track by perpendicular magnetisation of the memory layer (4), which magnetic head (2, 25) has a ring core head-like conductive body (14) which conducts the magnetic flux, having two magnetic legs (6, 7; 26, 27) the poles ($P_1$, $P_2$) of which are in tandem arrangement in the direction of movement of the head and at a predetermined distance (11) from each other, and to which, in addition to a coil winding (17) exclusively for the read function, whose turns (16) extend through a gap (15) formed between the magnetic legs (6, 7; 26, 27), an additional coil winding (19, 28) is allocated for the write function, characterised in that the additional coil winding (19, 28) at least partially encloses one magnetic leg (7, 26) and that the other magnetic leg (6, 27) has, at least in a partial section, a predetermined small cross-section so that this partial section is driven during the write operation, by means of the additional write coil winding (19, 28), in the absence of current of the read coil winding (17), at least to a large extent into magnetic saturation.

2. Magnetic head according to claim 1, characterised in that its conductive body (14) which conducts the magnetic flux is constructed at least partially in several layers as a thin layer structure, on the flat side of an even substrate body (3), said side being provided if necessary with an insulation layer.

3. Magnetic head according to claim 2, characterised in that the coil windings (17, 19, 28) which partially surround the conductive body (14) are likewise constructed in several layers as thin layer structures.

4. Magnetic head according to claim 3, characterised in that the read coil winding (17 is constructed as a multi-layered, at least to a large extent, planar structure.

5. Magnetic head according to any one of claims 1–4, characterised in that its conductive body (14) which conducts the magnetic flux consists at least in part of a soft magnetic material.

6. Magnetic head according to any one of claims 1–5, characterised in that its conductive body (14) which conducts the magnetic flux consists of a material whose easy magnetisation is at least predominantly set perpendicularly to the conducting direction of the magnetic flux.

7. Magnetic head according to one of the claims 1–6, characterised in that the distance (w) between the ends (8, 9) of the poles ($P_1$, $P_2$) of the magnetic legs (6, 7; 26, 27), which ends are facing the recording medium (M), is no more than 1 µm.

8. Magnetic head according to one of the claims 1–7, characterised in that formed between the magnetic legs (6, 7; 26, 27) there is a gap (15) which widens from the distance (w) between the ends (8, 9) of the legs' poles ($P_1$, $P_2$), which ends are facing the recording medium (M), to a larger distance (w'), and in which gap the turns (16) of the read coil winding (17) are partially arranged.

9. Magnetic winding according to one of the claims 1–8, characterised in that the additional write coil winding (19, 28) is formed a single coil loop around one magnetic leg (7, 26), its winding parts (22, 23) covering at least to a large extent the surface of the magnetic leg (7, 26) in question.

10. Magnetic head according to one of the claims 1–8, characterised in that additional write coil winding has several turns.

11. Magnetic head according to one of the claims 1–10, characterised in that to the read coil winding (17), during the write operation with the additional write coil winding (19, 28), a resistor is connected in parallel with a predetermined low ohmic value.

FIG 1

FIG 2